# EUROPÄISCHE PATENTANMELDUNG

(11) **EP 4 410 096 A1**
(43) Veröffentlichungstag der Anmeldung: **07.08.2024**
(21) Anmeldenummer: 23154742.3
(22) Anmeldetag: 02.02.2023
(51) Int. Cl.: A01G 20/47

(54) **HANDGEFÜHRTES BLASGERÄT**

(71) Anmelder: Andreas Stihl AG & Co. KG, 71336 Waiblingen (DE)
(72) Erfinder: OBERHOFER, Felix, 70327 Stuttgart (DE); VON KRANE, Florian, 71737 Kirchberg (DE); ZAUNER, Markus, 70736 Fellbach (DE); STÜRZEL, Thilo, 73630 Remshalden (DE); EICHNER, Alexander, 73230 Kirchheim unter Teck (DE); KÖNIG, Markus, 70771 Leinfelden-Echterdingen (DE)
(74) Vertreter: Reinhardt, Annette

(57) **Zusammenfassung**

Ein handgeführtes Blasgerät (1) umfasst einen Handgriff (6) zum Führen des Blasgeräts (1) im Betrieb, ein Blasrohr (2) und eine in dem Blasrohr (2) angeordnete Gebläseeinheit (3). Das Blasgerät (1) weist eine Ansaugöffnung (8) und eine Ausblasöffnung (9) auf. Die Gebläseeinheit (3) weist mindestens ein Gebläserad (14) auf, um das eine Drehachse (13) rotierend antreibbar ist. Die Drehachse (13) ist in Richtung eines im Betrieb vom Gebläserad (14) abströmenden Luftstroms ausgerichtet. Das mindestens eine Gebläserad (14) ist von einem Elektromotor (4) angetrieben. Das Blasgerät (1) weist einen Akku (5) auf, der den Elektromotor (4) mit Energie versorgt. Zwischen dem Handgriff (6) und dem Blasrohr (2) erstreckt sich eine Grifföffnung (42). Das Blasgerät (1) weist eine Mittelebene (41) auf, die den Handgriff (6) und den Akku (5) schneidet und die die Drehachse (13) des Gebläserads (14) enthält. Eine kompakte und ergonomische Anordnung der Komponenten des Blasgeräts wird erreicht, wenn der Akku (5) und der Handgriff (6) auf gegenüberliegenden Seiten des Blasrohrs (2) angeordnet sind und die Oberseite (24) des Blasrohrs (2) bei Blickrichtung senkrecht auf die Mittelebene (41) eine Eindrückung (44) aufweist, die sich über mindestens 50% der parallel zur Drehachse (13) gemessenen Länge (g) der Grifföffnung (42) erstreckt.

## Beschreibung

Die Erfindung betrifft ein handgeführtes Blasgerät der im Oberbegriff des Anspruchs 1 angegebenen Gattung.

Aus der US 9,603,497 B2 geht ein handgeführtes Blasgerät hervor, dessen Antriebsmotor von einer Batterie angetrieben ist. Die Batterie ist unterhalb eines Handgriffs des Blasgeräts angeordnet. Das Blasrohr endet bezogen auf die Längsmittelachse des Blasrohrs vor dem Handgriff und dem Akku.

Der Erfindung liegt die Aufgabe zugrunde, ein handgeführtes Blasgerät der gattungsgemäßen Art zu schaffen, das einen vorteilhaften Aufbau besitzt.

Diese Aufgabe wird durch ein handgeführtes Blasgerät mit den Merkmalen des Anspruchs 1 gelöst.

Dadurch, dass Akku und Handgriff auf gegenüberliegenden Seiten des Blasrohrs angeordnet sind, ergibt sich ein kompakter Aufbau. Das Blasrohr ist dabei vorteilhaft zwischen Handgriff und Akku hindurchgeführt. Dadurch kann die Ansaugung von Blasluft aus einem Bereich an der Rückseite des Geräts, also an der der Ausblasöffnung abgewandten Seite von Handgriff und Akku, erfolgen. Dadurch werden Umlenkungen des Blasluftstroms vermieden. Zwischen dem Handgriff und dem Blasrohr erstreckt sich eine Grifföffnung. Das Blasgerät weist eine Mittelebene auf, die den Handgriff und den Akku schneidet und die die Drehachse des Gebläserads enthält. Die Oberseite des Blasrohrs weist bei Blickrichtung senkrecht auf die Mittelebene eine Eindrückung auf. Das Blasrohr ist aufgrund der Eindrückung an der Oberseite benachbart zur Grifföffnung demnach vorteilhaft schmaler. Dadurch kann auf einfache Weise Platz für die Hand des Benutzers geschaffen werden und der Handgriff in vergleichsweise geringem Abstand zur Drehachse des Gebläserads angeordnet werden. Die Eindrückung erstreckt sich insbesondere über mindestens 50 % der parallel zur Drehachse gemessenen Länge der Grifföffnung. Dadurch ergibt sich ein kompakter Aufbau. Die im Betrieb beim Schwenken des Blasgeräts um eine horizontal verlaufende Achse entstehenden Kräfte können vergleichsweise gering gehalten werden.

Vorteilhaft ist in mindestens einer Schnittebene senkrecht zur Drehachse des Gebläserads, wobei die Schnittebene die Grifföffnung schneidet, der Abstand der Drehachse der Gebläseeinheit zu einer benachbart zur Grifföffnung verlaufenden Oberseite des Blasrohrs geringer als der Abstand der Drehachse zu einer gegenüberliegenden Unterseite des Blasrohrs. Die Drehachse des Gebläserads verläuft in der Schnittebene demnach bevorzugt nicht mittig durch das Blasrohr. Das Blasrohr ist bezüglich einer Ebene, die die Drehachse enthält und senkrecht zur Mittelebene verläuft, vorteilhaft unsymmetrisch ausgebildet. Die Unterseite des Blasrohrs verläuft insbesondere benachbart zum Akku.

Die Oberseite des Blasrohrs ist dabei der Bereich des Blasrohrs, der einen vergleichsweise geringen Abstand zu der Grifföffnung aufweist, und die Unterseite des Blasrohrs ist der Bereich des Blasrohrs, der einen größeren Abstand zu der Grifföffnung aufweist. In üblicher Arbeitslage des Blasgeräts verläuft die Unterseite des Blasrohrs unterhalb der Oberseite des Blasrohrs.

Die Drehachse des Gebläserads ist in Richtung eines im Betrieb vom Gebläserad abströmenden Luftstroms ausgerichtet. Die Drehachse des Gebläserads ist insbesondere in Richtung einer Längsmittelachse des Blasrohrs ausgerichtet. Bei dem Gebläserad handelt es sich vorteilhaft um ein Axialgebläserad oder um ein Diagonalgebläserad. Das Gebläserad ist insbesondere nicht als Radialgebläserad ausgebildet.

Der Akku ist vorteilhaft wechselbar.

Vorteilhaft verläuft die Mittelebene in einer Arbeitslage senkrecht und der Handgriff ist oberhalb des Blasrohrs angeordnet und der Akku ist unterhalb des Blasrohrs angeordnet. Die Arbeitslage entspricht vorteilhaft einer üblichen Arbeitslage des Blasgeräts im Betrieb. In der üblichen Arbeitslage hält der Bediener das Blasgerät am Handgriff und das Blasrohr verläuft unterhalb des Handgriffs.

Vorliegend bezeichnet der Begriff "Blasrohr" insbesondere den Abschnitt des Rohrs, durch den im Betrieb Arbeitsluft gefördert wird, der fest mit einem Gehäuse des Blasgeräts verbunden und nicht dazu vorgesehen ist, im üblichen Betrieb von einem Bediener demontiert zu werden. Das Blasrohr kann mit dem Gehäuse des Blasgeräts einteilig ausgebildet sein oder mit dem Gehäuse über nicht werkzeuglos lösbare Verbindungsmittel verbunden sein. An der Ausblasöffnung aus dem Blasrohr können vom Bediener üblicherweise unterschiedliche Düsenaufsätze fixiert werden. Die Düsenaufsätze sind üblicherweise werkzeuglos zu montieren und zu demontieren, beispielsweise über Bajonettverbindungen oder Schnappverbindungen.

Um einen kompakten Aufbau des Blasgeräts zu erreichen, ist vorteilhaft vorgesehen, dass eine senkrecht zur Mittelebene gemessene Breite des Blasrohrs in mindestens einer Schnittebene, die die Grifföffnung schneidet und die senkrecht zur Drehachse des Gebläserads liegt, größer als die Höhe des Blasrohrs in dieser Schnittebene ist. Das Blasrohr weist in der mindestens einen Schnittebene demnach keinen runden Querschnitt auf. Dadurch lässt sich auf einfache Weise ein kompakter Aufbau des Blasgeräts erreichen. Aufgrund der verringerten Höhe des Blasrohrs können Grifföffnung und Akku und insbesondere Handgriff und Akku näher zueinander rücken, so dass die Gesamthöhe des Blasgeräts in diesem Bereich verringert werden kann. Die Breite des Blasrohrs in dieser Schnittebene beträgt vorteilhaft mindestens 110 %, insbesondere mindestens 130 %, bevorzugt mindestens 150 % der Höhe des Blasrohrs in dieser Schnittebene. Die Breite und die Höhe des Blasrohrs sind dabei vorteilhaft die Innenmaße des Blasrohrs. Die Höhe und Breite der Außenmaße des Blasrohrs sind vorteilhaft entsprechend gewählt. Vorteilhaft verläuft die Drehachse der Gebläseeinheit in dem Bereich des Blasrohrs, in dem die Breite des Blasrohrs größer als die Höhe des Blasrohrs ist, nicht mittig bezogen auf die Höhe des Blasrohrs.

Im Sinne der vorliegenden Anmeldung ist die Drehachse des Gebläserads eine Gerade im Raum. Die Drehachse ist nicht auf die Position des Gebläserads begrenzt, sondern beidseitig des Gebläserads unendlich verlängert. Angaben, die Maße bezogen auf die Drehachse definieren, geben demnach lediglich einen Abstand zu einer unendlich langen Achse im Raum an, jedoch keine Position bezogen auf die Längsrichtung der Drehachse.

Der Akku weist vorteilhaft eine Längsachse auf. Die Längsachse des Akkus verläuft vorteilhaft parallel zur Mittelebene. Bevorzugt liegt die Längsachse des Akkus in der Mittelebene. Der Akku ist bevorzugt näherungsweise quaderförmig oder zylindrisch ausgebildet. Auch eine ovale Form des Akkus kann vorgesehen sein. Die Längsachse des Akkus verläuft zwischen gegenüberliegenden Außenseiten des Akkus senkrecht durch die gegenüberliegenden Seiten des Akkus, die den größten Abstand voneinander aufweisen. Der Akku ist demnach in Richtung der Mittelebene ausgerichtet.

Vorteilhaft verläuft das Blasrohr im Längsabschnitt zwischen dem Handgriff und der Ausblasöffnung abgewinkelt oder gebogen. Dadurch ist es möglich, die Ausblasöffnung aus dem Blasrohr so auszurichten, dass die Verlängerung der Mittelachse der Ausblasöffnung den Handgriff schneidet. Dadurch üben Rückstoßkräfte der ausgeblasenen Luft kein oder nur ein geringes Schwenkmoment um den Handgriff aus. Dadurch muss der Bediener geringere Kräfte aufwenden, um das Blasgerät im Betrieb zu halten. Vorteilhaft schließt die Längsmittelachse des Blasrohrs in der Ausblasöffnung mit der Drehachse des Gebläserads bei Blickrichtung senkrecht zur Mittelebene einen Winkel ein, der von 120° bis 175°, insbesondere von 140° bis 170° beträgt. Die Längsmittelachse des Blasrohrs entspricht dabei vorteilhaft der Hauptströmungsrichtung eines durch das Blasrohr geförderten Luftstroms. Die Längsmittelachse des Blasrohrs ist vorteilhaft eine Kurve und keine Gerade. Die Neigung oder Krümmung des Blasrohrs beginnt bevorzugt stromab des mindestens einen Gebläserads. Die Gebläseräder und Leiträder der Gebläseeinheit sind vorteilhaft in einem Abschnitt des Blasrohrs angeordnet, der gerade verläuft und bevorzugt einen runden Querschnitt aufweist. Dadurch kann eine Gebläseeinheit mit einfachem Aufbau zum Einsatz kommen. Vorteilhaft ist der Abstand der Oberseite des Blasrohrs zur Drehachse an der Ansaugöffnung größer als der Abstand der Unterseite des Blasrohrs zur Drehachse. Das Blasrohr öffnet demnach an der Ansaugöffnung an der Oberseite. Dadurch kann eine ausreichend große Ansaugfläche auf einfache Weise realisiert werden. An der gegenüberliegenden Unterseite des Blasrohrs ist der Akku angeordnet. In diesem Bereich des Blasrohrs ist vorteilhaft ausreichend Bauraum, um den Akku von der Rückseite des Blasgeräts, also von der Seite, zu der auch die Ansaugöffnung öffnet, einschieben zu können.

Vorteilhaft weist der Akku eine Längsachse auf, die mit der Drehachse des Gebläserads einen Winkel von mehr als 2° einschließt. Der Winkel öffnet dabei entgegen der Strömungsrichtung im Blasrohr. Der Akku ist demnach zur Drehachse des Gebläserads geneigt, vorzugsweise um einen vergleichsweise geringen Winkel. Dadurch kann ausreichend Freiraum für ein Einschieben des Akkus von der Rückseite des Blasgeräts geschaffen werden und gleichzeitig eine ausreichend große Ansaugöffnung realisiert werden.

Vorteilhaft ist der Akku an einem Gehäuse des Blasgeräts über eine mechanische Verriegelungseinheit gehalten. Vorteilhaft ist die Verriegelungseinheit zumindest teilweise zwischen dem Akku und dem Blasrohr angeordnet. Um einen kompakten Aufbau zu erreichen, ist vorteilhaft vorgesehen, dass das Blasrohr eine Einwölbung aufweist, in die ein Betätigungselement der Verriegelungseinheit ragt. Dadurch wird eine kompakte Gesamtanordnung geschaffen. Die Einwölbung erstreckt sich bevorzugt bis zur Ansaugöffnung des Blasrohrs. Das Betätigungselement ist vorteilhaft so angeordnet und gestaltet, dass es von der Seite des Blasgeräts, an der die Ansaugöffnung Luft ansaugt, gut zugänglich ist. Das Betätigungselement ist vorteilhaft von der Seite des Blasgeräts aus zugänglich, zu der der Akku entnommen wird. Dadurch ist ein einfaches Entnehmen des Akkus möglich.

Um einen ergonomischen Betrieb des Blasgerät zu ermöglichen, ist die Gewichtsverteilung der Komponenten des Blasgeräts vorteilhaft so gewählt, dass sich beim Arbeiten mit dem Blasgerät, insbesondere beim Schwenken des Blasgeräts um eine vertikale Achse, geringe Kräfte ergeben. Vorteilhaft sind auch die durch den Rückstoß der aus dem Blasrohr austretenden Luft erzeugten Kräfte für den Bediener gering. Eine solche Anordnung wird erreicht, wenn der Akku und der Elektromotor des Gebläserads so angeordnet werden, dass der Schwerpunkt der Anordnung bei einer gewünschten Betriebslage des Blasrohrs und der Ausblasöffnung unterhalb des Handgriffs liegt.

Um einen kompakten Aufbau des Blasgeräts zu erreichen, ist vorteilhaft vorgesehen, dass der Akku zur Ausblasöffnung einen parallel zur Drehachse gemessenen Abstand aufweist, der größer als der in gleicher Richtung gemessene Abstand der Grifföffnung zur Ausblasöffnung ist. Die Grifföffnung beginnt demnach bezogen auf die Richtung der Drehachse näher an der Ausblasöffnung als der Akku.

Der Elektromotor weist vorteilhaft einen parallel zur Drehachse des Gebläserads gemessenen Abstand zur Ausblasöffnung auf, der geringer als ein in gleicher Richtung gemessener Abstand der Grifföffnung zur Ausblasöffnung ist. Der Elektromotor ist demnach bezogen auf die Drehachse des Gebläserads näher an der Ausblasöffnung angeordnet als das der Ausblasöffnung nahe liegende Ende der Grifföffnung. Besonders bevorzugt ist der Elektromotor vollständig stromab der Grifföffnung angeordnet. Bezogen auf die Drehachse des Gebläserads endet der Elektromotor demnach in einem Abstand zur Ausblasöffnung, der kleiner als der Abstand der Grifföffnung zur Ausblasöffnung ist.

An der Ausblasöffnung sind alle Abstände zum gleichen Punkt der Ausblasöffnung gemessen.

Vorteilhaft ragt der Akku bezogen auf die Drehachse des mindestens einen Gebläserads nicht über die Ansaugöffnung hinaus. Der parallel zur Drehachse gemessene größte Abstand der Ansaugöffnung zur Ausblasöffnung ist vorteilhaft größer als der in gleicher Richtung gemessene Abstand des der Ansaugöffnung entfernt liegenden Endes des Akkus zur Ausblasöffnung. Der Abstand von Ansaugöffnung und Ausblasöffnung kann dabei geringfügig größer als der Abstand des der Ansaugöffnung entfernt liegenden Endes des Akkus zur Ausblasöffnung sein. Der größte Abstand der Ausblasöffnung zur Ansaugöffnung ist dabei zwischen dem der Ansaugöffnung entfernt liegenden Bereich der Ansaugöffnung und der Ausblasöffnung gemessen.

Um ein unbeabsichtigtes Zusetzen der Ansaugöffnung zu verhindern und auch bei geringfügigen Verschmutzungen eine ausreichend große Ansaugfläche bereitstellen zu können, ist vorteilhaft vorgesehen, dass die Ansaugöffnung einen ersten stirnseitigen Ansaugbereich und einen zweiten Ansaugbereich am Umfang des Blasrohrs aufweist. Ist eine der Ansaugöffnungen beispielsweise durch Blätter oder die Kleidung des Bedieners teilweise verdeckt, so kann über den anderen Ansaugbereich dennoch eine ausreichende Ansaugung von Blasluft gewährleistet werden.

Die Wand eines Ansaugabschnitts des Blasrohrs, der sich zwischen der Ansaugöffnung und der Gebläseeinheit erstreckt, weist vorteilhaft mindestens eine Öffnung auf, die den Innenraum des Blasrohrs mit einem hinter der Wand ausgebildeten Hohlraum verbindet. Die mindestens eine Öffnung bildet mit dem Hohlraum einen Helmholtzresonator, der die Geräuschentwicklung im Ansaugabschnitt des Blasrohrs deutlich verringern kann. Bevorzugt sind eine Vielzahl von Öffnungen vorgesehen, um eine effektive Geräuschminderung zu erreichen.

Der Elektromotor ist vorteilhaft im Blasrohr angeordnet. Ein kompakter Aufbau ergibt sich, wenn der Elektromotor in einem Innenraum der Gebläseeinheit angeordnet ist.

Vorteilhaft ist der parallel zur Drehachse des Gebläserads gemessene maximale Abstand der der Ausblasöffnung entfernt liegenden Seite des Elektromotors nicht mehr als 5 cm größer, bevorzugt kleiner als der in gleicher Richtung gemessene Abstand der Grifföffnung zur Ausblasöffnung. Der Elektromotor liegt demnach höchstens geringfügig hinter dem der Ausblasöffnung nahe liegenden Ende der Grifföffnung. Bevorzugt liegt der Elektromotor vor dem Beginn der Grifföffnung. Dadurch kann eine kompakte Anordnung und günstige Gewichtsverteilung des Blasgeräts erreicht werden. Die Begriffe "vor" und "hinter" beziehen sich in der vorliegenden Anmeldung dabei auf die Strömungsrichtung im Blasrohr, die sich von der hinten liegenden Ansaugöffnung zu der vorne liegenden Ausblasöffnung erstreckt. Eine erste Position, die in Strömungsrichtung weiter entfernt von der Ausblasöffnung angeordnet ist als eine zweite Position, wird als hinter der zweiten Position bezeichnet.

Der parallel zur Drehachse des Gebläserads gemessene Abstand der der Ausblasöffnung entfernt liegenden Seite des Elektromotors ist bevorzugt kleiner als der in gleicher Richtung gemessene Abstand des Akkus zur Ausblasöffnung.

Ausführungsbeispiele der Erfindung werden im Folgenden anhand der Zeichnung erläutert. Es zeigen:
- Fig. 1: eine Seitenansicht eines handgeführten Blasgeräts,
- Fig. 2: eine Draufsicht auf das Blasgerät aus Fig. 1 in Richtung des Pfeils II in Fig. 1,
- Fig. 3: eine teilgeschnittene Seitenansicht des Blasgeräts aus den Fig. 1 und 2,
- Fig. 4: eine schematische vergrößerte Darstellung der Anordnung der Komponenten des Blasgeräts,
- Fig. 5: einen Schnitt entlang der Linie V-V in Fig. 4,
- Fig. 6: eine Seitenansicht in Richtung des Pfeils VI in Fig. 3,
- Fig. 7: die Darstellung aus Fig. 6 mit abgenommenem Ansauggitter,
- Fig. 8: eine ausschnittsweise vergrößerte Schnittdarstellung des Bereichs VIII in Fig. 3, der die Verriegelungseinheit des Blasgeräts zeigt.

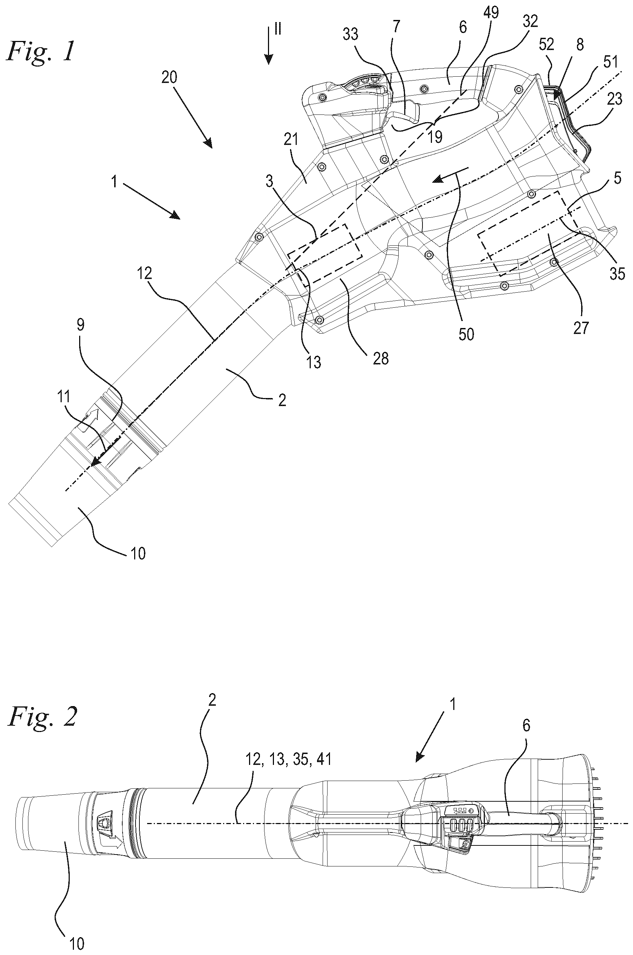

Fig. 1 zeigt ein handgeführtes Blasgerät 1 in Seitenansicht. Das Blasgerät 1 umfasst ein Blasrohr 2. Das Blasrohr 2 weist eine Ansaugöffnung 8 sowie eine Ausblasöffnung 9 auf. Ansaugöffnung 8 und Ausblasöffnung 9 sind an gegenüberliegenden Stirnseiten des Blasrohrs 2 ausgebildet. Das Blasrohr 2 bildet im Ausführungsbeispiel einen Teil des Gehäuses 21 des Blasgeräts 1. Das Blasgerät 1 weist einen Handgriff 6 auf. Im Ausführungsbeispiel bildet der Handgriff 6 einen Teil des Gehäuses 21. Am Handgriff 6 ist im Ausführungsbeispiel ein Bedienhebel 7 zur Ansteuerung einer im Folgenden noch näher beschriebenen Gebläseeinheit des Blasgeräts 1 angeordnet. Vorteilhaft sind weitere Bedienelemente vorgesehen, die in geeigneter Weise mit dem Bedienhebel 7 zusammenwirken können.

Der Handgriff 6 weist einen Griffbereich 19 auf, an dem ein Bediener den Handgriff 6 greifen kann. Im Griffbereich 19 ist der Handgriff 6 vorzugsweise mit abgerundetem, für den Bediener gut greifbarem Querschnitt ausgebildet. Der Griffbereich 19 weist ein erstes Ende 32 sowie ein zweites Ende 33 auf. Die Hand eines Bedieners ist am Handgriff 6 so anzuordnen, dass Zeigefinger und Daumen näher am zweiten Ende 33 und die Kleinfingerseite der Hand näher am ersten Ende 32 angeordnet sind.

Fig. 1 zeigt das Blasgerät 1 in einer üblichen Arbeitslage 20 für den Betrieb. In dieser Arbeitslage 20 ist die Ausblasöffnung 9 schräg zum Boden gerichtet. Eine Ausblasöffnung 11 aus dem Blasrohr 2 weist schräg zum Boden. Am Blasrohr 2 ist an der Ausblasöffnung 9 im Ausführungsbeispiel eine Düse 10 angeordnet. Die Ausblasöffnung 9 ist die Austrittsöffnung aus dem Teil des Blasrohrs 2, der am Gehäuse 21 unlösbar gehalten oder einteilig mit dem Gehäuse 2 ausgebildet ist. Je nach anstehender Arbeitsaufgabe können unterschiedliche Düsen 10 an der Ausblasöffnung 9 des Blasrohrs 2 angeordnet werden.

Wie Fig. 1 zeigt, ist an der Ansaugöffnung 8 ein Ansauggitter 23 angeordnet. Das Ansauggitter 23 dient dazu, das Eintreten von größeren Verschmutzungen in das Blasrohr 2 zu verhindern. Das Ansauggitter 23 weist im Ausführungsbeispiel unterschiedliche Ansaugbereiche, nämlich einen ersten, stirnseitigen Ansaugbereich 51 sowie einen zweiten, umfangsseitigen Ansaugbereich 52 auf. Auch andere oder weitere Ansaugbereiche können vorteilhaft sein. Die Ansaugbereiche 51 und 52 sind Flächen, die durch das Ansauggitter 23 aufgespannt sind. Die Ansaugbereiche 51 und 52 stehen im Ausführungsbeispiel winklig zueinander. Selbst wenn einer der Ansaugbereiche 51 oder 52 von angesaugten Teilen wie beispielsweise Blättern, Kleidung eines Bedieners oder dergleichen verschlossen ist, kann durch den anderen Ansaugbereich noch Arbeitsluft angesaugt werden.

In Fig. 1 ist schematisch auch die Anordnung von Komponenten des Blasgeräts 1 gezeigt. Im Blasrohr 2 ist eine Gebläseeinheit 3 angeordnet. Der die Gebläseeinheit 3 umfassende Bereich des Gehäuses 21 wird nachfolgend als Gebläsegehäuse 28 bezeichnet. Das Blasgerät 1 weist außerdem einen Akku 5 auf, der in einem Akkugehäuse angeordnet ist. Der Akku 5 weist eine Längsachse 35 auf.

Wie Fig. 1 zeigt, sind der Handgriff 6 und der Akku 5 auf gegenüberliegenden Seiten des Blasrohrs 2 angeordnet. Das Blasrohr 2 ist zwischen Handgriff 6 und Akku 5 hindurchgeführt. Der Handgriff 6 ist in der in Fig. 1 dargestellten Arbeitslage 20 oberhalb des Blasrohrs 2 angeordnet. Der Akku 5 ist in der in Fig. 1 dargestellten Arbeitslage 20 unterhalb des Blasrohrs 2 angeordnet.

Das Blasrohr 2 weist eine Längsmittelachse 12 auf. Die Längsmittelachse 12 verbindet die Flächenschwerpunkte von Schnitten durch das Blasrohr 2 senkrecht zu einer Strömungsrichtung 50 im Blasrohr 2. Wie Fig. 1 zeigt, ist die Längsmittelachse 12 des Blasrohrs 2 im Ausführungsbeispiel in einem Bereich gebogen ausgebildet. Auch ein abgeknickter Verlauf des Blasrohrs 2 kann vorteilhaft sein. Die Ausblasrichtung 11 verläuft daher stärker zum Boden geneigt als bei geradem Verlauf der Längsmittelachse 12. In Fig. 1 ist die Längsmittelachse 12 in der Ausblasöffnung 9 mit gestrichelter Linie in Richtung auf den Handgriff 6 verlängert dargestellt. Die dargestellte Verlängerung 49 der Längsmittelachse 12 in der Ausblasöffnung 9 schneidet den Handgriff 6 zwischen seinem ersten Ende 32 und seinem zweiten Ende 33, wie Fig. 1 zeigt. Eine Rückstoßkraft, die von der durch die Ausblasöffnung 9 austretenden Arbeitsluft erzeugt wird, verläuft daher durch den Handgriff 6. Dadurch ist das Schwenkmoment, das eine solche Kraft am Handgriff 6 ausübt, vergleichsweise gering.

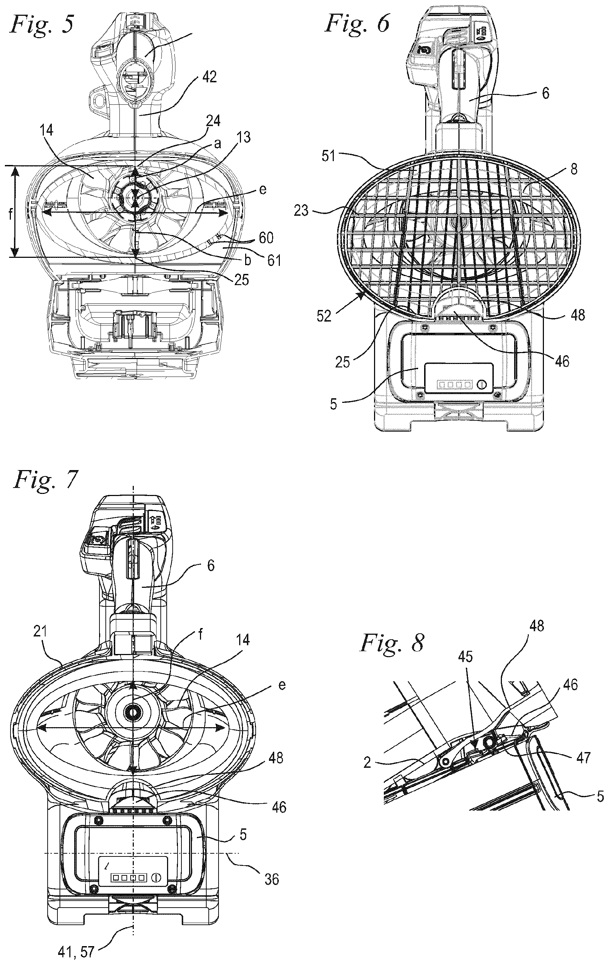

Wie Fig. 2 zeigt, weist das Blasgerät 1 eine Mittelebene 41 auf. In der in Fig. 2 dargestellten Draufsicht liegt die Längsachse 35 des Akkus 5 in der Mittelebene 41. Vorteilhaft schneidet die Mittelebene 41 den Akku 5 mittig. Es kann jedoch auch vorgesehen sein, dass die Längsachse 35 parallel zur Mittelebene 41 in einem Abstand zu dieser verläuft. Auch die Längsmittelachse 12 verläuft im Ausführungsbeispiel in der Mittelebene 41. Die Gebläseeinheit 3 weist mindestens ein in Fig. 7 dargestelltes Gebläserad 14 auf. Das Gebläserad 14 ist vorzugsweise ein Axial- oder ein Diagonalgebläserad. Die Gebläseeinheit 3 ist vorteilhaft ein Axialgebläse. Die Gebläseeinheit 3 kann jedoch auch ein Diagonalgebläse sein. Das Gebläserad 14 ist um eine in Fig. 1 schematisch dargestellte Drehachse 13 rotierend angetrieben. Wie Fig. 2 zeigt, liegt die Drehachse 13 des mindestens einen Gebläserads 14 in der Mittelebene 41. Die Mittelebene 41 ist eine Ebene des Blasgeräts 1, die den Handgriff 6 und den Akku 5 schneidet und die die Drehachse 13 des Gebläserads 14 enthält. Das Blasgerät 1 kann demnach mehrere Mittelebenen 41 aufweisen. Vorzugsweise schneidet die Mittelebene 41 den Handgriff 6 mittig.

Im Betrieb fördert das Blasgerät 1 einen Luftstrom in der Strömungsrichtung 50 durch das Blasrohr 2. Die Drehachse 13 des mindestens einen Gebläserads 14 ist in Richtung des im Betrieb vom Gebläserad 14 abströmenden Luftstroms ausgerichtet. An der stromab liegenden Seite des Gebläserads 14 verläuft die Drehachse 13 in Strömungsrichtung 50.

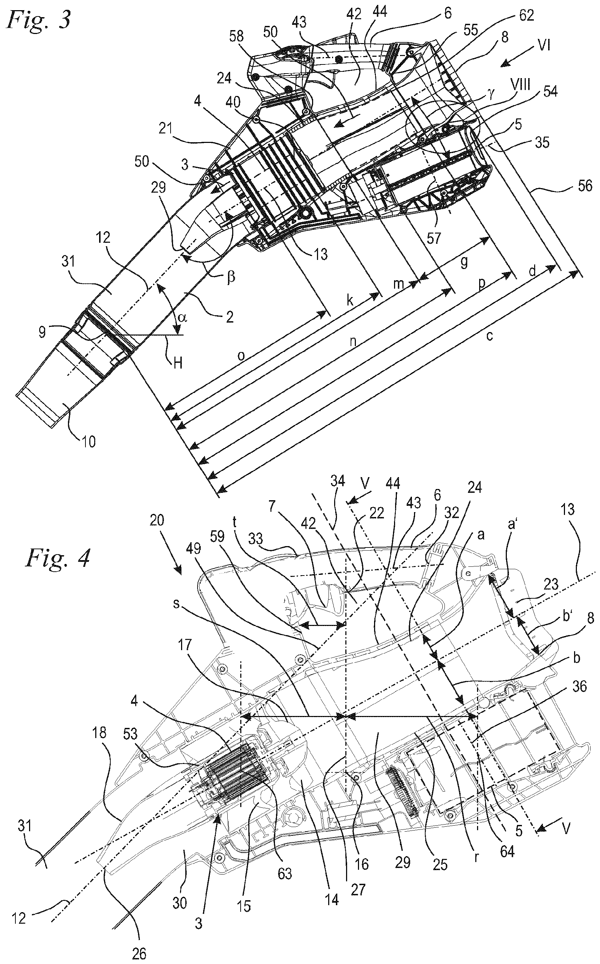

Fig. 3 zeigt eine teilgeschnittene Seitenansicht des Blasgeräts 1. Wie Fig. 3 zeigt, ist die Gebläseeinheit 3 im Blasrohr 2 angeordnet. Die Gebläseeinheit 3 ist vorteilhaft in jeder Schnittebene senkrecht zur Drehachse 13 mittig im Blasrohr 2 angeordnet. Die Drehachse 13 des Gebläserads 14 fällt vorteilhaft in dem Bereich der Gebläseeinheit 3, in dem ein in Fig. 4 dargestellter Elektromotor 4 angeordnet ist, mit der Längsmittelachse 12 zusammen. Wie Fig. 4 zeigt, ist am Eintritt in die Gebläseeinheit 3 ein Eintrittsleitelement 17 angeordnet. Am Außenumfang des Eintrittsleitelements 17 ist ein Gebläserad 14 ausgebildet. Das Gebläserad 14 ist - im Ausführungsbeispiel mit dem Eintrittsleitelement 17 - von dem Elektromotor 4 rotierend um die Drehachse 13 angetrieben. Stromab des Gebläserads 14 ist ein Leitrad 15 angeordnet, das im Betrieb nicht mitdreht.

Der Elektromotor 4 ist, wie Fig. 4 zeigt, im Inneren des Leitrads 15 angeordnet. Der Elektromotor 4 ist in einem zylindrischen Gehäuseteil 53 angeordnet. Am Außenumfang des Gehäuseteils 53 erstreckt sich das Leitrad 15. Vorteilhaft wird im Betrieb in das Gehäuseteil 53 Luft zur Kühlung des Elektromotors 4 angesaugt. Stromab des Leitelements 15 geht das Gehäuseteil 53 im Ausführungsbeispiel in ein Austrittsleitelement 18 über. An der stromab liegenden Stirnseite des Austrittsleitelements 18 ist eine Öffnung 26 ausgebildet, über die vorteilhaft im Betrieb Kühlluft in das Gehäuseteil 53 angesaugt wird, um den Elektromotor 4 zu kühlen. Alternativ oder zusätzlich kann eine andere Kühlung des Elektromotors 4 vorteilhaft sein.

Im Ausführungsbeispiel ist die Gebläseeinheit 3 als einstufiges Gebläse ausgebildet. Die Gebläseeinheit 3 ist im Ausführungsbeispiel ein Axialgebläse. Auch mehrere Gebläseräder, also mehrere Gebläsestufen, können für die Gebläseeinheit 3 vorteilhaft sein. Anstatt als Axialgebläseräder können die Gebläseräder 14 auch als Diagonalgebläseräder ausgebildet sein.

Wie Fig. 3 zeigt, fördert die Gebläseeinheit 3 im Blasrohr 2 die Arbeitsluft von der Ansaugöffnung 8 zur Ausblasöffnung 9 in der Strömungsrichtung 50. Der Handgriff 6 weist eine Längsmittelachse 43 auf. Zwischen dem Handgriff 6 und dem Blasrohr 2 ist eine Grifföffnung 42 ausgebildet, in die die Hand eines Bedieners im Betrieb eingreifen kann. In dem an die Grifföffnung 42 angrenzenden Bereich weist das Blasrohr 2 im Ausführungsbeispiel eine Eindrückung 44 auf. Die Eindrückung 44 ist als Abflachung an einer Oberseite 24 des Blasrohrs 2 ausgebildet. Die Eindrückung 44 erstreckt sich über mindestens 50 %, insbesondere über mindestens 70 % einer parallel zur Drehachse 13 gemessenen Länge g der Grifföffnung 42.

In Fig. 3 sind die Abstände von unterschiedlichen Elementen des Blasgeräts 2 zur Ausblasöffnung 9 dargestellt. Alle Abstände sind dabei parallel zur Drehachse 13 des mindestens einen Gebläserads 14 (Fig. 4) gemessen. Alle Abstände sind zum gleichen Punkt der Ausblasöffnung 9 gemessen. Ein beliebiger Punkt der Ausblasöffnung 9 kann als Bezugspunkt für die Messung der Abstände dienen. Der in Fig. 3 mit gestrichelter Linie dargestellte Elektromotor 4 weist zur Ausblasöffnung 9 einen Abstand o auf. Die der Ausblasöffnung 9 abgewandt liegende Seite 40 des Elektromotors 4 weist zur Ausblasöffnung 9 einen Abstand k auf. Die Grifföffnung 42 weist zur Ausblasöffnung 9 einen Abstand m auf. Der Abstand k ist zu dem der Ausblasöffnung 9 nahe liegenden Ende 58 der Grifföffnung 42 gemessen. Der Abstand m ist im Ausführungsbeispiel größer als der Abstand k. Der Abstand m ist größer als der Abstand o. Ist der Abstand m größer als der Abstand k, so liegt der Elektromotor 4 bezogen auf die Drehachse 13 vollständig vor der Grifföffnung 42.

Der Akku 5 weist zur Ausblasöffnung 9 einen Abstand n auf. Im Ausführungsbeispiel ist der Abstand n größer als der Abstand m und größer als die Abstände o und k. Der Akku 5 liegt demnach bezogen auf die Drehachse 13 hinter dem der Ausblasöffnung 9 nahe liegenden Ende 58 der Grifföffnung 42. Wie Fig. 3 zeigt, überlappen sich Grifföffnung 42 und Akku 5 bezogen auf die Drehachse 13. Es existieren demnach mehrere Schnittebenen senkrecht zur Drehachse 13, die sowohl die Grifföffnung 42 als auch den Akku 5 schneiden. Bevorzugt überlappen sich Akku 5 und Grifföffnung 42 über mindestens 30 %, insbesondere mindestens 50 % der Länge g der Grifföffnung 42. Die Länge g ist dabei parallel zur Drehachse 13 gemessen.

Die Grifföffnung 42 weist ein der Ausblasöffnung entfernt liegendes Ende 55 auf. Das Ende 55 weist zur Ausblasöffnung 9 einen Abstand p auf, der parallel zur Drehachse 13 gemessen ist. Der Akku 5 weist eine der Ausblasöffnung 9 abgewandt liegende Seite 54 auf. Die Seite 54 des Akkus 5 weist zur Ausblasöffnung 9 einen Abstand d auf. Der Abstand d ist größer als der Abstand p des der Ausblasöffnung 9 entfernt liegenden Endes 55 der Grifföffnung 42.

Die Ansaugöffnung 8 weist zur Ausblasöffnung 9 einen größten Abstand c auf. Der Abstand c ist zu dem der Ausblasöffnung 9 entfernt liegenden Bereich der Ansaugöffnung 8 gemessen. Der größte Abstand c ist größer als die Abstände d, p, n, m, k und o. Die Ansaugöffnung 9 bildet im Ausführungsbeispiel die der Ausblasöffnung 9 entfernt liegende Rückseite des Blasgeräts 1. Eine senkrecht zur Drehachse 13 verlaufende, an der Ansaugöffnung 8 anliegende gedachte Ebene 56, zu der der größte Abstand c gemessen ist, schneidet keine weiteren Komponenten des Blasgeräts 8.

Wie Fig. 3 zeigt, ist die Längsmittelachse 12 des Blasrohrs 2 in der in Fig. 3 dargestellten üblichen Arbeitshaltung 20 zu einer Horizontalen H um einen Winkel α geneigt. Der Winkel α beträgt vorteilhaft von 25° bis 40°. Die Längsmittelachse 12 in der Ausblasöffnung 9 schließt mit der Drehachse 13 des mindestens einen Gebläserads 14 (Fig. 4) einen Winkel β ein. Der Winkel β beträgt weniger als 180°. Bevorzugt beträgt der Winkel β zwischen 120° und 170°, insbesondere zwischen 150° und 170°. Der Winkel β ist in Blickrichtung senkrecht zur Mittelebene 41 gemessen. Der Winkel β ist in Blickrichtung senkrecht zur Mittelebene 41 insbesondere in dem von der Längsmittelachse 12 und der Drehachse 13 eingeschlossenen Bereich gemessen, der in der üblichen Arbeitshaltung 20 den Boden unterhalb des Blasgeräts 1 und den Akku 5 einschließt.

Die Längsachse 35 des Akkus 5 schließt mit der Drehachse 13 in Blickrichtung senkrecht auf die Mittelebene 41 einen Winkel γ ein, der vorteilhaft mindestens 2° beträgt. Der Winkel β beträgt von 120° bis 175°, insbesondere von 140° bis 170°. Der Winkel γ öffnet dabei entgegen der Strömungsrichtung 50 im Blasrohr 2. Die Blickrichtung senkrecht auf die Mittelebene 41 entspricht der in Fig. 2 dargestellten Ansicht.

Das Blasrohr 2 weist einen Ansaugabschnitt 29, einen Gebläseabschnitt 30 und einen Ausblasabschnitt 31 auf, die in Fig. 4 gezeigt sind. Der Gebläseabschnitt 30 schließt an den Ansaugabschnitt 29 an, und der Ausblasabschnitt 31 schließt an den Gebläseabschnitt 30 an. Der Ansaugabschnitt 29 erstreckt sich von der Ansaugöffnung 8 bis zum Eintritt in die Gebläseeinheit 3. Im Ausführungsbeispiel ist der Eintritt in die Gebläseeinheit 3 an der stromauf liegenden Seite des Eintrittsleitelements 17 ausgebildet. Der Gebläseabschnitt 30 erstreckt sich vom Eintritt in die Gebläseeinheit 3 bis zur Öffnung 26, also bis zum stromab liegenden Ende der Gebläseeinheit 3. Der Ausblasabschnitt 31, der auch in Fig. 3 gezeigt ist, erstreckt sich vom Gebläseabschnitt 30 bis zur Ausblasöffnung 9. Wie die Fig. 3 und 4 zeigen, verläuft der Knick bzw. die Krümmung des Blasrohrs 2 im Ausführungsbeispiel vollständig im Gebläseabschnitt 30, und zwar in dem Bereich des Gebläseabschnitts 30, in dem das Austrittsleitelement 18 angeordnet ist. Auch eine andere Lage des gekrümmten oder abgeknickten Bereichs des Blasrohrs 2 kann jedoch vorteilhaft sein.

Zur Reduzierung der Geräuschentwicklung im Betrieb kann das Blasrohr 2, insbesondere der Ansaugabschnitt 29 des Blasrohrs 2, eine Auskleidung 62 aufweisen. Dies ist in Fig. 3 schematisch mit gestrichelter Linie dargestellt. Die Auskleidung 62 kann bevorzugt ein geschäumter Kunststoff sein. Besonders bevorzugt ist die Auskleidung 62 zumindest teilweise in dem Bereich des Blasrohrs 2 angeordnet, der in üblicher Arbeitslage 20 unterhalb der Grifföffnung 42 angeordnet ist.

Das Blasgerät 1 weist einen Schwerpunkt 16 auf, der in Fig. 4 schematisch dargestellt ist. In der Arbeitslage 20 liegt der Schwerpunkt 16 unter dem Griffbereich 19. Das Blasgerät 1 pendelt sich so aus, dass der Schwerpunkt 16 unter dem Griffbereich 19 liegt, wenn das Blasgerät 1 lediglich am Handgriff 6 von unten abgestützt wird. Die Längsmittelachse 43 des Handgriffs 6 liegt in Arbeitslage 20 vorzugsweise näherungsweise horizontal. Die Längsmittelachse 43 schließt mit der Horizontalen H (Fig. 3) in der Arbeitslage 20 vorzugsweise einen Winkel ein, der kleiner als 20°, insbesondere kleiner als 10° ist.

Der Schwerpunkt 16 liegt unter einem Griffpunkt 22 des Handgriffs 6, der nahe des Bedienhebels 7 am Handgriff 6 liegt. Im Griffpunkt 22 ist üblicherweise eine Hand eines Bedieners angeordnet. Die Verlängerung 49 der Längsmittelachse 12 in der Ausblasöffnung 9 schneidet den Handgriff 6 bevorzugt benachbart zum Griffpunkt 22 oder im Griffpunkt 22. Das der Ausblasöffnung 9 nahe liegende Ende 58 der Grifföffnung 42 bildet einen Handanschlag 59. An dem Handanschlag 59 kann ein Zeigefinger eines Bedieners bei betätigtem Bedienhebel 7 anliegen. Vorteilhaft ist der in üblicher Arbeitslage 20 in horizontaler Richtung gemessene Abstand t des Handanschlags 59 zum Schwerpunkt 16 vergleichsweise gering. Vorteilhaft beträgt der Abstand t weniger als 8 cm, insbesondere etwa 4 cm bis 5 cm. Eine Achse 27, die in üblicher Arbeitslage 20 vertikal und durch den Schwerpunkt 16 verläuft, verläuft in üblicher Handhaltung des Bedieners vorzugsweise durch den Bereich von Mittelfinger und Ringfinger des Bedieners. Dadurch können im Betrieb wirkende Kräfte vom Bediener ergonomisch aufgenommen werden. Kräfte, die beim Schwenken des Blasgeräts 1 um die Achse 27 wirken, sind vergleichsweise gering. Bevorzugt ist der Bedienhebel 7 so dimensioniert, dass nur der Zeigefinger eines Bedieners den Bedienhebel 7 betätigt und Mittelfinger und Ringfinger eines Bedieners den Handgriff 6 umschließen. Der Bereich von Mittelfinger und Ringfinger des Bedieners definiert vorzugsweise den Griffpunkt 22.

Der Elektromotor 4 der Gebläseeinheit 3 weist einen Schwerpunkt 63 auf. Der Akku 5 weist einen Schwerpunkt 64 auf. Vorzugsweise sind der Schwerpunkt 63 und/oder der Schwerpunkt 64 in üblicher Arbeitslage 20 in horizontaler Richtung möglichst nah am Schwerpunkt 16 des Blasgeräts 1 angeordnet. Dadurch sind die beim Schwenken des Blasgeräts 1 in Arbeitslage 20 um die Achse 27 erzeugten Kräfte vergleichsweise klein. Der Schwerpunkt 63 des Elektromotors 4 weist in üblicher Arbeitslage 20 einen in horizontaler Richtung gemessenen Abstand s zum Schwerpunkt 16 auf. Der Abstand s beträgt vorzugsweise weniger als 20 cm, insbesondere weniger als 17 cm, bevorzugt weniger als 15 cm. Der Schwerpunkt 64 des Akkus 5 weist in üblicher Arbeitslage 20 einen in horizontaler Richtung gemessenen Abstand r zum Schwerpunkt 16 auf. Der Abstand r ist im Ausführungsbeispiel größer als der Abstand s. In vorteilhafter alternativer Gestaltung ist der Abstand r kleiner als der Abstand s. Der Abstand r beträgt vorteilhaft weniger als 20 cm, insbesondere weniger als 17 cm, bevorzugt weniger als 15 cm.

Wie Fig. 4 zeigt, erstreckt sich die Eindrückung 44 im Ausführungsbeispiel über die gesamte Länge der Grifföffnung 42. Wie Fig. 4 zeigt, weist eine Oberseite 24 des Blasrohrs 2 an der Grifföffnung 42 zur Drehachse 13 einen Abstand a auf. Eine gegenüberliegende Unterseite 25 des Blasrohrs 2 weist zur Drehachse 13 einen Abstand b auf. Der Abstand b ist größer als der Abstand a. Die Unterseite 25 des Blasrohrs 2 begrenzt das Blasrohr 2 zum Akku 5 hin. An der Ansaugöffnung 8 weist die Oberseite 24 zur Drehachse 13 einen Abstand a' auf. Die Unterseite 25 weist zur Drehachse 13 einen Abstand b' auf. Der Abstand a' an der Ansaugöffnung 8 ist größer als der Abstand b'. Die Oberseite 24 ist vorteilhaft die Seite des Blasrohrs 2, die in Arbeitslage 20 oben angeordnet ist und die Unterseite 25 ist vorteilhaft die Seite des Blasrohrs 2, die in Arbeitslage 20 unten angeordnet ist.

Durch die Grifföffnung 42 verläuft eine Ebene 34, in der der Abstand a zur Drehachse 13 zur Oberseite 24 minimal ist. Die Ebene 34 weist sowohl zum ersten Ende 32 als auch zum zweiten Ende 33 des Handgriffs 6 vorteilhaft einen Abstand auf, der mindestens 20 % der Länge g der Grifföffnung 42 entspricht.

Fig. 5 zeigt einen Schnitt durch das Blasrohr 2 senkrecht zur Drehachse 13 des Gebläserads 14 im Bereich der Grifföffnung 42. Wie Fig. 5 zeigt, ist eine im Folgenden noch näher beschriebene Breite e des Blasrohrs 2 größer als eine im Folgenden noch näher beschriebene Höhe f. Wie die Schnittdarstellung auch zeigt, ist der Abstand a der Oberseite 24 des Blasrohrs 2 an der Grifföffnung 42 zur Drehachse 13 kleiner als der Abstand b der Unterseite 25 des Blasrohrs 2 zur Drehachse 13. Wie Fig. 5 auch zeigt, weist das Blasrohr 2 in der gezeigten Schnittebene einen unrunden, im Ausführungsbeispiel einen etwa ovalen Querschnitt auf.

Fig. 6 zeigt einen Blick auf die Ansaugöffnung 8 mit dem Ansauggitter 23. Wie Fig. 6 zeigt, ist am Ansauggitter 23 an der Stirnseite des Blasrohrs 2 (Fig. 3) der erste Ansaugbereich 51 gebildet. Fig. 6 zeigt auch die Anordnung von Handgriff 6 und Akku 5 auf gegenüberliegenden Seiten des Blasrohrs 2. Wie Fig. 6 auch zeigt, ist an der Unterseite 25 des Blasrohrs 2 eine Einwölbung 48 ausgebildet, in die ein Betätigungselement 46 zum Lösen und Verriegeln des Akkus 5 ragt.

Wie Fig. 7 zeigt, weist der Akku 5 eine Querachse 36 auf, die senkrecht zur Mittelebene 41 und senkrecht zur Längsachse 35 ausgerichtet ist. Im Ausführungsbeispiel weist der Akku 5 eine etwa quaderförmige Gestalt auf. Die Längsachse 35 verläuft in Richtung der längsten Seite des Akkus und die Querachse 36 verläuft in Richtung der mittleren Erstreckung des Akkus 5. Die kürzeste Erstreckung des Akkus 5 ist parallel zur Mittelebene 41 und in Arbeitslage 20 senkrecht ausgerichtet. Die Hochachse 57 des Akkus 5 ist auch in Fig. 3 dargestellt. Die Längsachse 35, die Querachse 36 und die Hochachse 57 verlaufen senkrecht zueinander und bilden vorteilhaft die Hauptachsen des Akkus 5.

An der Ansaugöffnung 8 weist das Blasrohr 2 eine senkrecht zur Mittelebene 41 gemessene Breite e und eine parallel zur Mittelebene 41, bevorzugt vertikal gemessene Höhe f auf. Wie Fig. 7 zeigt, ist die Höhe f deutlich kleiner als die Breite e. Die Breite e beträgt vorteilhaft mindestens 110 %, insbesondere mindestens 130 %, bevorzugt mindestens 150 % der Hohe f. Im Ausführungsbeispiel beträgt die Breite e etwa 180 % bis etwa 220 % der Höhe f. Die Höhe f und die Breite e sind ausgehend von der Ansaugöffnung 8 bis zum Eintritt in die Gebläseeinheit 3 bevorzugt so ausgelegt, dass der Strömungsquerschnitt des Blasrohrs 2 näherungsweise konstant ist. Dadurch kann auf einfache Weise eine günstige räumliche Anordnung und kompakte Bauweise bei geringem Strömungswiderstand im Blasrohr 2 realisiert werden.

Fig. 8 zeigt die Verriegelungseinheit 45 für den Akku 5 im Einzelnen. Die Verriegelungseinheit 45 umfasst einen Schwenkhebel 47, der in einem durch die Einwölbung 48 gebildeten Hohlraum zwischen Akku 5 und Blasrohr 2 angeordnet ist. Der Schwenkhebel 47 ist vorteilhaft gefedert gelagert und verriegelt in der in Fig. 8 dargestellten unbetätigten Position den Akku 5. Wird der Schwenkhebel 47 vom Bediener betätigt, wird der Akku 5 entriegelt und kann vom Bediener zum Laden oder zum Austausch aus dem Gehäuse 21 entnommen werden. Die Verriegelungseinheit 45 ist zwischen Akku 5 und Blasrohr 2 angeordnet. Dadurch ergibt sich eine bauraumsparende Anordnung.

Um die Schallerzeugung insbesondere im Ansaugabschnitt 29 gering zu halten, kann der Ansaugabschnitt nach Art eines Helmholtzresonators ausgebildet sein. Hierzu ist bevorzugt vorgesehen, dass das Blasrohr mindestens eine, bevorzugt eine Vielzahl von Öffnungen am Umfang aufweist. In Fig. 5 sind schematisch und exemplarisch zwei derartige Öffnungen 60 gezeigt. An der Außenseite des Blasrohrs 2 ist ein Hohlraum 61 gebildet, in den die Öffnungen 60 münden. Dieses definierte, mit dem Blasrohr 2 verbundene Luftvolumen ist vorzugweise so ausgebildet, dass der im Blasrohr 2 entstehende Schall reduziert wird.

Im Ausführungsbeispiel ist der Elektromotor 4 im Inneren der Gebläseeinheit 3 angeordnet. Alternativ kann vorgesehen sein, dass der Elektromotor 4 an anderer Stelle, bevorzugt außerhalb des Blasrohrs 2, angeordnet ist.

## Patentansprüche

1. Handgeführtes Blasgerät mit einem Handgriff (6) zum Führen des Blasgeräts (1) im Betrieb, einem Blasrohr (2) und mit einer in dem Blasrohr (2) angeordneten Gebläseeinheit (3), wobei das Blasgerät (1) eine Ansaugöffnung (8) und eine Ausblasöffnung (9) aufweist, wobei die Gebläseeinheit (3) mindestens ein Gebläserad (14) aufweist, das um eine Drehachse (13) rotierend antreibbar ist, wobei die Drehachse (13) in Richtung eines im Betrieb vom Gebläserad (14) abströmenden Luftstroms ausgerichtet ist, wobei das mindestens eine Gebläserad (14) von einem Elektromotor (4) angetrieben ist, wobei das Blasgerät (1) einen Akku (5) aufweist, der den Elektromotor (4) mit Energie versorgt,
wobei der Akku (5) und der Handgriff (6) auf gegenüberliegenden Seiten des Blasrohrs (2) angeordnet sind und wobei sich zwischen dem Handgriff (6) und dem Blasrohr (2) eine Grifföffnung (42) erstreckt und das Blasgerät (1) eine Mittelebene (41) aufweist, die den Handgriff (6) und den Akku (5) schneidet und die die Drehachse (13) des Gebläserads (14) enthält,
**dadurch gekennzeichnet, dass** die Oberseite (24) des Blasrohrs (2) bei Blickrichtung senkrecht auf die Mittelebene (41) eine Eindrückung (44) aufweist, die sich über mindestens 50 % der parallel zur Drehachse (13) gemessenen Länge (g) der Grifföffnung (42) erstreckt.

2. Blasgerät nach Anspruch 1,
**dadurch gekennzeichnet, dass** in mindestens einer Schnittebene senkrecht zur Drehachse (13) des Gebläserads (14), wobei die Schnittebene die Grifföffnung (42) schneidet, der Abstand (a) der Drehachse (13) der Gebläseeinheit (3) zu einer benachbart zur Grifföffnung (42) verlaufenden Oberseite (24) des Blasrohrs (2) geringer als der Abstand (b) der Drehachse (13) zu einer gegenüberliegenden Unterseite (25) des Blasrohrs (2) ist.

3. Blasgerät nach Anspruch 1 oder 2,
**dadurch gekennzeichnet, dass** eine senkrecht zur Mittelebene (41) gemessene Breite (e) des Blasrohrs (2) in mindestens einer Schnittebene senkrecht zur Drehachse (13), die die Grifföffnung (42) schneidet, größer als eine in der Mittelebene (41) gemessene Höhe (f) des Blasrohrs (2) in dieser Schnittebene ist.

4. Blasgerät nach einem der Ansprüche 1 bis 3,
**dadurch gekennzeichnet, dass** eine Längsachse (35) des Akkus (5) parallel zur Mittelebene (41) verläuft.

5. Blasgerät nach einem der Ansprüche 1 bis 4,
**dadurch gekennzeichnet, dass** bei Blickrichtung senkrecht zur Mittelebene (41) eine Längsmittelachse (12) des Blasrohrs (2) in der Ausblasöffnung (9) mit der Drehachse (13) des Gebläserads (14) einen Winkel (β) einschließt, der von 120° bis 175°, insbesondere von 140° bis 170° beträgt.

6. Blasgerät nach einem der Ansprüche 1 bis 5,
**dadurch gekennzeichnet, dass** der Abstand (a') der Oberseite (24) des Blasrohrs (2) zur Drehachse (13) an der Ansaugöffnung (8) größer ist als der Abstand (b') der Unterseite (25) des Blasrohrs (2) zur Drehachse (13).

7. Blasgerät nach einem der Ansprüche 1 bis 6,
**dadurch gekennzeichnet, dass** der Akku (5) eine Längsachse (35) aufweist, die mit der Drehachse (13) des Gebläserads (14) einen Winkel (γ) von mehr als 2° einschließt, wobei der Winkel (γ) entgegen der Strömungsrichtung (50) im Blasrohr (2) öffnet.

8. Blasgerät nach einem der Ansprüche 1 bis 7,
**dadurch gekennzeichnet, dass** der Akku (5) an einem Gehäuse (21) des Blasgeräts (1) über eine mechanische Verriegelungseinheit (45) gehalten ist, die zumindest teilweise zwischen dem Akku (5) und dem Blasrohr (2) angeordnet ist, wobei das Blasrohr (2) eine Einwölbung (48) aufweist, in die ein Betätigungselement (46) der Verriegelungseinheit (45) ragt.

9. Blasgerät nach einem der Ansprüche 1 bis 8,
**dadurch gekennzeichnet, dass** der Akku (5) zur Ausblasöffnung (9) einen parallel zur Drehachse (13) gemessenen Abstand (n) aufweist, der größer als der in gleicher Richtung gemessene Abstand (m) der Grifföffnung (42) zur Ausblasöffnung (9) ist.

10. Blasgerät nach einem der Ansprüche 1 bis 9,
**dadurch gekennzeichnet, dass** der Elektromotor (4) einen parallel zur Drehachse (13) des Gebläserads (14) gemessenen Abstand (o) zur Ausblasöffnung (9) aufweist, der geringer als ein in gleicher Richtung gemessener Abstand (m) der Grifföffnung (42) zur Ausblasöffnung (9) ist.

11. Blasgerät nach einem der Ansprüche 1 bis 10,
**dadurch gekennzeichnet, dass** der parallel zur Drehachse (13) gemessene größte Abstand (c) der Ansaugöffnung (8) zur Ausblasöffnung (9) größer als der Abstand (d) des der Ansaugöffnung (8) entfernt liegenden Endes (32) des Akkus (5) zur Ausblasöffnung (9) ist.

12. Blasgerät nach einem der Ansprüche 1 bis 11,
**dadurch gekennzeichnet, dass** die Ansaugöffnung (8) einen ersten stirnseitigen Ansaugbereich (51) und einen zweiten Ansaugbereich (52) am Umfang des Blasrohrs (2) aufweist.

13. Blasgerät nach einem der Ansprüche 1 bis 12,
**dadurch gekennzeichnet, dass** in Arbeitslage (20) der Schwerpunkt (16) des Arbeitsgeräts (1) unter dem Handgriff (6) angeordnet ist.

14. Blasgerät nach einem der Ansprüche 1 bis 13,
**dadurch gekennzeichnet, dass** der Elektromotor (4) im Blasrohr (2), insbesondere in einem Innenraum der Gebläseeinheit (3) angeordnet ist.

15. Blasgerät nach einem der Ansprüche 1 bis 14,
**dadurch gekennzeichnet, dass** der parallel zur Drehachse (13) des Gebläserads (14) gemessene maximale Abstand (k) der der Ausblasöffnung (9) entfernt liegenden Seite (40) des Elektromotors (4) nicht mehr als 5 cm größer, insbesondere kleiner als der in gleicher Richtung gemessene Abstand (m) der Grifföffnung (42) zur Ausblasöffnung (9) ist.
